# EUROPÄISCHE PATENTSCHRIFT

(11) **EP 2 310 704 B1**
(45) Veröffentlichungstag und Bekanntmachung des Hinweises auf die Patenterteilung: **04.12.2013**
(21) Anmeldenummer: 09775920.3
(22) Anmeldetag: 29.06.2009
(51) Int. Cl.: F16D 3/06, F16D 21/06, F16D 25/08

(54) **DOPPELKUPPLUNG**
DUAL CLUTCH
EMBRAYAGE DOUBLE

(30) Priorität: 14.07.2008 DE 102008033034
(43) Veröffentlichungstag der Anmeldung: 20.04.2011
(73) Patentinhaber: Schaeffler Technologies AG & Co. KG, 91074 Herzogenaurach (DE)
(72) Erfinder: NÖHL, Oliver, 77830 Bühlertal (DE); AGNER, Ivo, 77815 Bühl (DE)
(74) Vertreter: Hoferer, Andreas
(86) Internationale Anmeldenummer: PCT/DE2009/000901
(87) Internationale Veröffentlichungsnummer: WO 2010/006578

(56) Entgegenhaltungen:
- EP-A- 1 632 687
- EP-A2- 1 302 687
- WO-A-2004/048794
- WO-A-2008/046379
- WO-A1-2007/062618
- FR-A- 2 797 004

## Beschreibung

Die Erfindung betrifft eine Doppelkupplung mit zwei von einer Antriebseinheit angetriebenen Reibungskupplungen mit einem gemeinsamen Kupplungsgehäuse und einer mit diesem fest verbundenen Anpressplatte mit zwei Anpressflächen sowie zwei jeweils einer Anpressfläche zugewandten, axial verlagerbaren Druckplatten.

Doppelkupplungen mit zwei Reibungskupplungen mit einem Kupplungsgehäuse und einer mit diesem fest verbundenen zentralen Anpressplatte sind z.B. aus WO 2004/048794 und WO 2008/046379 bekannt. Dabei werden die Druckplatten von Betätigungseinrichtungen axial verlagert, indem radial innen axial eine Tellerfeder oder Hebelelemente mit einem vorgegebenen Ausrückweg beaufschlagt werden. Dabei stützen sich diese je nach Ausgestaltung der zugeordneten Reibungskupplung als zwangsweise zugedrückte oder zugezogene, also zwangsweise geschlossene, oder aufgedrückte oder aufgezogene, also zwangsweise geöffnete Reibungskupplung als einarmiger oder zweiarmiger Hebel am Kupplungsgehäuse unter Ausbildung einer Übersetzung ab, so dass der Axialweg der Betätigungseinrichtung länger als der Weg der Druckplatte vom vollständig geöffneten Zustand der Reibungskupplung, in dem kein Moment übertragen wird, zum vollständig geschlossenen Zustand, bei dem das maximale Moment übertragen wird, ist.

Infolge des vergleichsweise hohen Gewichts von Doppelkupplungen sind diese neben ihrer Aufnahme an der Kurbelwelle häufig auf einer der beiden Getriebeeingangswellen, beispielsweise auf der als Hohlwelle um die erste Getriebeeingangswelle koaxial angeordneten zweiten Getriebeeingangswelle radial abgestützt. Entsprechende Stützlager sind dabei häufig zwischen der zentralen Anpressplatte und der Hohlwelle angeordnet. Hierbei kann die Hohlwelle zum einen zusätzlichen Belastungen wie radial wirksamen Gewichtskräften der Doppelkupplung, Unwuchten sowie axial wirksamen Kräften während der Betätigung der Doppelkupplung ausgesetzt sein, die eine entsprechend abgestimmte Auslegung der Hohlwelle erfordert.

Weiterhin können in die Doppelkupplung vom Getriebe Schwingungsanregungen, beispielsweise bei Nulldurchgängen während Lastwechsein, eingeleitet werden, so dass in den Kupplungsscheiben entsprechende Dämpfungsmaßnahmen vorzusehen sind.

Aus dem Stand der Technik sind weiterhin Doppelkupplungen bekannt, die verdrehbar am Getriebegehäuse aufgenommen sind. Um die Betätigungskräfte der Betätigungseinrichtungen, die sich am Getriebegehäuse gegenüber der Doppelkupplung axial abstützen, abzufangen und die axialen Betätigungswege definiert zu gestalten, wird die Doppelkupplung mittels eines Festlagers am Getriebegehäuse aufgenommen. Eine derartige Ausgestaltung erfordert eine Teilmontage der Doppelkupplung an Getriebe- und Antriebsseite.

Es stellt sich daher die Aufgabe, eine Doppelkupplung vorzuschlagen, die eine radiale Abstützung der Doppelkupplung am Getriebegehäuse ohne Festlagerung erlaubt. Weiterhin soll die Doppelkupplung als Baueinheit montierbar sein.

Diese Aufgabe wird durch eine Doppelkuppung nach Anspruch 1 gelöst. Durch Integration des Betätigungssystems in die Doppelkupplung entsteht ein in sich geschlossener Kraftfluss zur Betätigung der beiden Reibungskupplungen, indem die zur Verpressung der Kupplungsscheiben zwischen Anpressplatte und Druckplatten von den Betätigungseinrichtungen in das Kupplungsgehäuse aufgewendete Kraft eingeleitet wird. Hierzu stützt sich ein gemeinsames Aktorgehäuse axial fest, beispielsweise mittels eines Stützlagers, an dem Kupplungsgehäuse ab. Auf diese Weise kann die die Doppelkupplung als autonom funktionierende Baueinheit ausgeführt werden, die als Ganzes prüfbar und montierbar ist. Lediglich die Versorgung der Betätigungseinrichtungen, die beispielsweise druckbeaufschlagbare Nehmerzylinder oder mechanische Elemente, die von Elektromotoren beaufschlagt werden, sein können, wird von außen an das Betätigungssystem herangeführt. Das Betätigungsgehäuse beziehungsweise dessen Aktorgehäuse steht durch die verdrehbare Aufnahme am Kupplungsgehäuse fest, während die Reibungskupplungen mit dem Kupplungsgehäuse rotieren. Zum Ausgleich dieser Relativverdrehung beaufschlagen die Betätigungseinrichtungen die Tellerfedern, Hebelfedem oder direkte Übertragungseinrichtung zur Beaufschlagung der Druckplatten unter Zwischenschaltung von Betätigungslagern. Die direkt zwischen den Betätigungseinrichtungen und den Druckplatten wirksamen Übertragungselemente, beispielsweise steife Kolbenbleche, beaufschlagen die Druckplatten ohne Hebelwirkung, indem ein von den Betätigungseinrichtungen vorgegebener Hub in Größe und Betrag direkt auf die Druckplatten übertragen wird.

Das Aktorgehäuse kann dabei mittels einer Spielpassung am Getriebegehäuse abgestützt und zentriert sein. Hierzu kann zwischen einer als Hohlwelle ausgestalteten Getriebeeingangswelle und dem Getriebegehäuse ein Ringspalt gebildet sein, in den ein axialer Ansatz des Aktorgehäuses axial eingreift und zentriert wird. Dabei kann die Doppelkupplung axial entgegen der Wirkung eines Energiespeichers begrenzt verlagerbar sein. Entsprechend einer vorteilhaften Ausgestaltung kann die Doppelkupplung antriebsseitig mittels einer Steckverzahnung drehfest und axial begrenzt verlagerbar aufgenommen sein, wobei eine axiale Verlagerung der Doppelkupplung getriebeseitig mittels eines Anschlags begrenzt ist und der Energiespeicher antriebsseitig angeordnet ist. Auf diese Weise ist die Doppelkupplung quasi schwimmend gelagert und kann von dem axial wirksamen Energiespeicher, beispielsweise einer Tellerfeder, gegen den getriebeseitigen Anschlag verspannt werden. Um große axiale Toleranzen ausgleichen zu können und die Federwirkung in der Einbausituation erhalten zu können kann ein axial plastisch verformbarer Energiespeicher, der während der Montage auf Einsatzabstand plastisch verformt wird, vorgesehen werden. Die Doppelkupplung kann auch ohne Beaufschlagung eines axial wirksamen Energiespeichers zwischen einer Anschlagsposition am Getriebe und einer Anschlagsposition an der Antriebswelle oder einem mit dieser verbundenen Bauteil frei schwimmend gelagert werden. Dies kann erfolgen, weil die Betätigungskräfte durch die axial feste Aufnahme des Betätigungssystems am Kupplungsgehäuse von diesem abgestützt werden und die Doppelkupplung daher einen in sich geschlossenen Kraftfluss aufweiset.

Zum Ausgleich von Achsversätzen der Rotationsachsen zwischen Antriebseinheit und Getriebe kann die Spielpassung zwischen dem Aktorgehäuse und dem Getriebe innerhalb eines vorgegebenen Winkels gelenkig verschwenkbar ausgestaltet werden. Hierzu kann an dem axialen Ansatz des Aktorgehäuses ein Ballus mit einem Radius vorgesehen werden, dessen Drehmittelpunkt auf der Rotationsachse der Getriebeeingangswellen liegt.

Das Eingangsteil der Doppelkupplung kann antriebsseitig mit der Kurbelwelle direkt oder unter Zwischenschaltung eines Drehschwingungsdämpfers, beispielsweise einem Zweimassenschwungrad mit einem Primär- und Sekundärteil verbunden sein. Dabei kann die Steckverbindung am Sekundärteil, also dem Ausgangsteil des Drehschwingungsdämpfers angeordnet sein, während das Primär- oder Eingangsteil des Zweimassenschwungrads beziehungsweise Drehschwingungsdämpfers mit der Antriebswelle der Antriebseinheit, beispielsweise einer Kurbelwelle einer Brennkraftmaschine verbunden ist. Weiterhin kann das Eingangsteil der Doppelkupplung auf einer Antriebswelle oder einem mit diesen drehfest verbundenen Bauteil der Antriebseinheit gelagert sein, wodurch die Antriebswelle einen Teil des Gewichts der Doppelkupplung trägt. Das Ausgangsteil des Drehschwingungsdämpfers bildet dabei eine Steckverbindung mit dem Eingangsteil der Doppelkupplung. Hierzu kann die Lagerung der Doppelkupplung mittels eines Gleitlagers auf der Antriebswelle erfolgen, wobei der radial innere Gleitlagerring antriebsseitig, beispielsweise als Winkelring an der Antriebswelle unter Ausbildung eines axialen Ansatzes als Lagerfläche verbunden und der radial äußere Lagerring von einem Eingangsteil der Doppelkupplung gebildet wird.

Die Doppelkupplung kann antriebsseitig axial fest, beispielsweise mit dem Ausgangsteil eines Drehschwingungsdämpfers wie Zweimassenschwungrad oder der Antriebswelle verbunden sein. In diesem Fall kann auf einen getriebeseitigen Anschlag der Spielpassung verzichtet werden. In vorteilhafter Weise kann zwischen der Doppelkupplung und der Antriebswelle zur Dämpfung von Axial- und/oder Taumelschwingungen der Antriebswelle sowie zum Ausgleich von Achsversätzen ein in axiale Richtung biegeweiches Bauteil, beispielsweise eine sogenannte Flexplate vorgesehen sein, die als Antriebsblech direkt mit der Doppelkupplung oder dem Eingangsteil des Drehschwingungsdämpfers verbunden sein kann.

Eine vorteilhaft ausgestaltete Doppelkupplung kann während der Montage auf die Getriebeeingangswellen aufgefädelt werden und bis zur Montage des Getriebes an die Antriebseinheit auf einer der Getriebeeingangswellen gelagert werden, bis der Formschluss zur Antriebswelle oder einem Drehschwingungsdämpfer hergestellt ist. Dabei kann vorteilhaft sein, wenn das Aktorgehäuse zumindest während der Montage zusätzlich auf einer Getriebeeingangswelle verdrehbar abgestützt ist. Ein entsprechendes Lager kann an einer der Getriebeeingangswellen, vorzugsweise an der Hohlwelle vorgesehen und als Nadel- oder Gleitlager ausgebildet sein, das zumindest begrenzt auf dieser axial verlagerbar ist. In bevorzugter Weise sind die Abstützung beziehungsweise das Nadel- oder Gleitlager und das das Aktorgehäuse aufnehmende Stützlager radial übereinander und axial in Linie angeordnet. Nach der Endmontage kann die Abstützung eine geringe Stützkraft der Doppelkupplung aufnehmen oder in vorteilhafter Weise nach der antriebsseitigen Aufnahme der Doppelkupplung zum Aktorgehäuse ein Lüftspiel ausbilden.

Als Antriebseinheit kann beispielsweise eine Brennkraftmaschine mit einer Kurbelwelle und/oder eine Elektromaschine mit einer Antriebswelle dienen. In Kombination kann ein hybridischer Antrieb vorgesehen sein, bei dem alternativ oder einander ergänzend zumindest eine Brennkraftmaschine und zumindest eine Elektromaschine die Antriebseinheit bilden.

Die beiden Reibungskupplungen sind vorzugsweise trockene Einscheibenkupplungen mit jeweils einer metallischen Reibfläche an der Anpress- und an den Druckplatten sowie Reibbeläge tragende, Gegenreibflächen bildende Kupplungsscheiben. Die Reibbeläge der Kupplungsscheiben sind bevorzugt mit einer Belagfederung ausgestattet, weiterhin werden die Druckplatten axial verlagerbar entgegen der Wirkung von Energiespeichern wie beispielsweise Blattfedern geschlossen, so dass während des Öffnens einer Reibungskupplung die zugehörige Druckplatte in Öffnungsrichtung verlagert wird.

Zumindest eine der beiden Reibungskupplungen ist dabei selbstöffnend ausgestaltet. Dies bedeutet, dass bei einer Entlastung der Betätigungseinrichtung die Reibungskupplung vom geschlossenen in den geöffneten Zustand übergeht. In bevorzugter Weise werden beide Reibungskupplungen als zwangsweise geschlossene, also von der jeweiligen Betätigungseinrichtung zugedrückte oder zugezogene Reibungskupplung ausgestaltet, so dass beide Reibungskupplungen selbstöffnend sind, sobald eine Betätigungseinrichtung, beispielsweise infolge eines Defekts nicht mehr in Funktion ist.

Durch die Abstützung der Doppelkupplung am Getriebegehäuse wird eine Abstützung der Doppelkupplung auf einer der beiden Getriebeeingangswellen vermieden, so dass diese keine Biegebelastung durch die Doppelkupplung erfahren und diesbezüglich keiner separaten Auslegung bedürfen. Weiterhin werden dadurch weder Schwingungen, beispielsweise Taumelschwingungen, vom Getriebe in die Doppelkupplung noch von der Doppelkupplung auf diese Weise in das Getriebe übertragen. Das Getriebe kann ein Getriebe mit einem Haupt- und einem Nebenabtrieb sein. In bevorzugter Weise wird die Doppelkupplung jedoch für ein Doppelkupplungsgetriebe mit zwei Teilantriebssträngen zur Bildung eines Lastschaltgetriebes eingesetzt, bei dem jeweils ein Teilantriebsstrang bei einem eingelegten Gang Moment von der Antriebseinheit bei geschlossener Reibungskupplung auf die Räder eines Kraftfahrzeugs überträgt und in dem anderen Teilantriebsstrang bei geöffneter Reibungskupplung ein nachfolgender Gang eingelegt beziehungsweise nach dem Einlegen im eingelegten Zustand bereitgehalten wird. Eine Schaltung erfolgt durch Überschneidung der beiden Reibungskupplungen der Doppelkupplung, wobei die geschlossene Reibungskupplung schlupfend geöffnet und die geöffnete Reibungskupplung schlupfend geschlossen wird, so dass während der Überschneidung über beiden Teilantriebsstränge wechselnde Teilmomente übertragen werden.

Es hat sich als vorteilhaft gezeigt, wenn beide Reibungskupplungen zwangsweise geschlossene Reibungskupplungen sind, um ein Verblocken des Doppelkupplungsgetriebes bei Ausfall einer Betätigungseinrichtung insbesondere während einer Überschneidungsschaltung zu vermeiden. Aufgrund der vorteilhaften Anordnung einer zentralen Anpressplatte mit gegenüberliegenden Druckplatten der Reibungskupplung werden die Betätigungswege zum Schließen der Reibungskupplungen in ihrer Funktion zueinander entgegengesetzt angeordnet.

Die Betätigungseinrichtungen können mechanische Hebelvorrichtungen sein, die von radial außen beispielsweise elektromotorisch betrieben werden. Besonders vorteilhaft ist eine pneumatische oder bevorzugt hydrostatische Betätigung der Doppelkupplung, wobei das Aktorgehäuse als Nehmerzylindergehäuse ausgebildet ist, in dem zur Beaufschlagung jeweils eines Übertragungselements jeweils ein von außen druckbeaufschlagter Nehmerzylinder untergebracht ist. Die Nehmerzylinder weisen hierzu jeweils einen Ringkolben oder über den Umfang verteilte Einzelkolben auf, die axial in einer von außen druckbeaufschlagbaren Druckkammer verlagerbar sind und unter Zwischenschaltung eines Betätigungslagers die Übertragungselemente betätigen.

Die Druckkammern der Nehmerzylinder werden beispielsweise von jeweils einem Geberzylinder, der mittels eines Elektromotors von einem Steuergerät gesteuert wird, oder von einer Pumpe, gegebenenfalls unter Mitwirkung eines Druckspeichers, beaufschlagt, wobei die Pumpe von der Antriebseinheit oder von einem Elektromotor betrieben werden kann. In vorteilhafter Weise kann ein sogenanntes Powerpack eingesetzt werden, das über eine zentrale Pumpe und entsprechenden Ventilen mehrere Druckkreisläufe schaltet, wobei beide Reibungskupplungen betätigt werden und die Beschaltung des Getriebes und die Umlaufschmierung des unten beschriebenen Ringraums erfolgen können.

Von dem erfinderischen Gedanken ist auch eine Reibungskupplung mit einem von einer Antriebseinheit angetriebenen Kupplungsgehäuse und einer mit diesem fest verbundenen Anpressplatte mit einer Reibfläche sowie einer der Reibfläche zugewandten, axial verlagerbaren Druckplatte erfasst, wobei zwischen der Druckplatte und der Anpressplatte Reibbeläge einer mit einer Getriebeeingangswelle eines Getriebes drehfest verbundenen Kupplungsscheibe zur Bildung eines Reibeingriffs durch axiale Beaufschlagung der Druckplatten mittels einer Betätigungseinrichtung verspannbar sind, dadurch gekennzeichnet, dass die Betätigungseinrichtung gegenüber dem Kupplungsgehäuse verdrehbar und an diesem axial fest aufgenommen ist und die Reibungskupplung mittels der Betätigungseinrichtung an einem Getriebegehäuse des Getriebes radial abgestützt ist.

Die Erfindung wird anhand der Figuren 1 bis 5 näher erläutert.

Dabei zeigen: ,
- Figuren 1, 3 und 4: einen Teilschnitt einer axial antriebsseitig begrentzt verlagerbaren Doppelkupplung, die nicht Gegenstand der Erfindung ist
- Figure 2: einen Teilschnitt durch ein Ausführungsbeispiel einer axial antriebsseitig begrenzt verlagerbaren Doppelkupplung und
- Figur 5: einen Teilschnitt durch ein Ausführungsbeispiel einer antriebsseitig axial fest angeordneten Doppelkupplung.

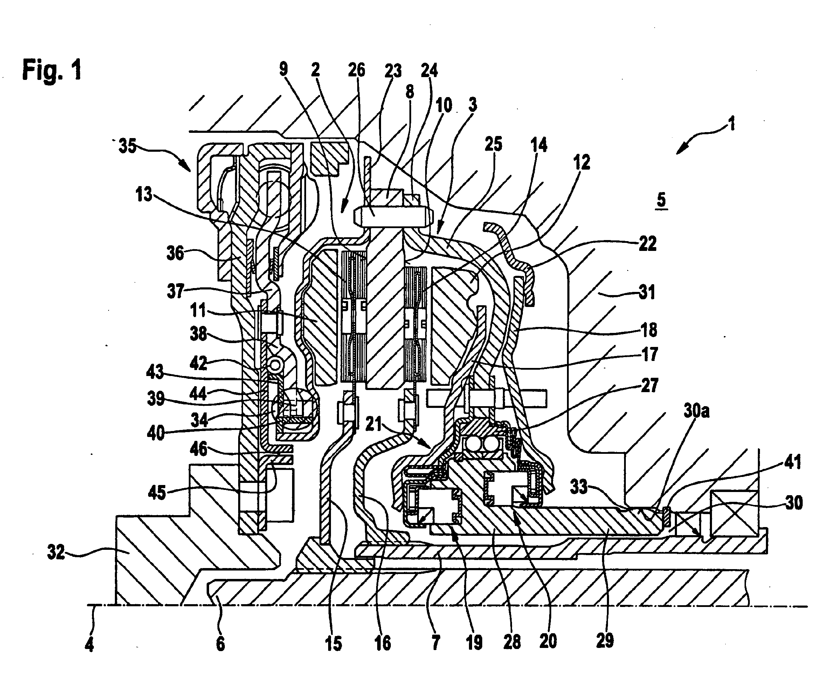

Figur 1 zeigt den oberen Teil einer um eine Rotationsachse 4 der Getriebeeingangswellen 6, 7 eines Getriebes 5 angeordnete Doppelkupplung 1 mit den Reibungskupplungen 2, 3. Die Reibungskupplungen 2, 3 sind durch eine zentrale Anpressplatte 8 und gegenüber jeweils einer Reibfläche 9, 10 verlagerbaren Druckplatten 11, 12 gebildet, wobei zwischen den Reibflächen 9, 10 und den diesen zugewandten Reibflächen der Druckplatten 11, 12 Reibbeläge 13, 14 von Kupplungsscheiben 15, 16 angeordnet sind, die jeweils mit einer Getriebeeingangswelle 6, 7 drehfest verbunden, beispielsweise verzahnt sind. Die Druckplatten 11, 12 werden in dem gezeigten Ausführungsbeispiel von Übertragungselementen 17, 18 beaufschlagt, die radial innen von Betätigungseinrichtungen 19, 20 des Betätigungssystems 21 direkt und ohne Hebelwirkung der Übertragungselemente 17, 18 axial verlagert werden. Die Druckplatte 11 der Reibungskupplung 2 wird dabei mittels der Zuganker 22 zugezogen, während die Reibungskupplung 3 mittels des Übertragungselements 17 zugedrückt wird.

Die Anpressplatte 8 ist mit dem aus den beiden Gehäuseteilen 23, 24 gebildeten Kupplungsgehäuse 25 fest verbunden, beispielsweise mittels der Nieten 26 vernietet. Am Kupplungsgehäuse 25 ist mittels des Stützlagers 27 das Aktorgehäuse 28 des Betätigungssystems 21 verdrehbar und axial fest aufgenommen. Das Betätigungssystem 21 weist als Betätigungseinrichtungen 19, 20 Nehmerzylinder auf, so dass das Aktorgehäuse 28 als Nehmerzylindergehäuse ausgebildet ist. Dieses Aktorgehäuse 28 ist mit einem axialen Ansatz 29 versehen, der an der Aufnahmefläche 30a einer zentralen Öffnung 30 des Getriebegehäuses 31 zentriert ist. Der axiale Ansatz 29 ist zum Ausgleich einer nicht koaxialen Anordnung der Rotationsachse 4 des Getriebes 5 und der nicht dargestellten Rotationsachse der Antriebswelle 32 der nicht dargestellten Antriebseinheit mit einem Ballus 33 versehen, der einen Radius aufweist, dessen Mittelpunkt auf der Rotationsachse 4 liegt, so dass das Aktorgehäuse 28 und damit die gesamte Doppelkupplung um einen geringen Winkelbetrag aus der Rotationsachse 4 verschwenkbar ist. Dieser Verschwenkwinkel wird antriebsseitig durch ein Verdrehflankenspiel der nachfolgend beschriebenen Steckverbindung 34 ermöglicht.

Die Doppelkupplung 1 wird mittels der Steckverbindung 34 drehfest und axial begrenzt verlagerbar auf der Antriebsseite aufgenommen. Diese wird in dem gezeigten Ausführungsbeispiel von der Antriebswelle 32, die eine Kurbelwelle einer Brennkraftmaschine sein kann, gebildet, an der ein Drehschwingungsdämpfer 35 wie Zweimassenschwungrad mittels eines Eingangsteils 36 aufgenommen ist. Das Ausgangsteil 37 bildet mit einem Flanschteil 38 zur Bildung der Steckverbindung 34 eine Innenverzahnung 39, die in Umfangsrichtung spielbehaftet mit einer am Innenumfang des Gehäuseteils 23 angebrachten Außenverzahnung 40 kämmt. Infolge der axial erweiterten Außenverzahnung 40 ist eine begrenzte axiale Verlagerung der Doppelkupplung möglich, die durch den am Getriebegehäuse 31 vorgesehenen Anschlag 41, beispielsweise in Form eines Spreng- oder Sicherungsrings, für den axialen Ansatz 29 des Aktorgehäuses 28 begrenzt wird. Die Doppelkupplung ist infolgedessen axial schwimmend gelagert. Das Verdrehspiel der Steckverbindung 34 wird entgegen der Wirkung eines Energiespeichers 42, der auf ein Spannblech 43 in Umfangsrichtung einwirkt, vorgespannt. Mit dem Flanschteil 38 ist ein Lagerblech 44 verbunden, das mit einem an der Antriebswelle 32 angeordneten Lagerblech 45 eine Lagerung 46, beispielsweise eine Gleitlagerung für das Ausgangsteil 37 und damit über die am Ausgangsteil 37 mittels der Steckverbindung 34 aufgenommene Doppelkupplung 1 bildet. Die Doppelkupplung ist damit, abgesehen von den Kupplungsscheiben 15, 16 von den Getriebeeingangswellen 6, 7, entkoppelt.

Die Doppelkupplung 1 wird als komplette Baueinheit geliefert, die das Betätigungssystem umfasst. Der Anschluss der beiden Nehmerzylinder erfolgt mittels nicht dargestellter Schnellkupplungen. Durch die Steckverbindung 34 kann eine Montage ohne Werkzeuge erfolgen. Hierzu wird die Doppelkupplung 1 auf die Getriebeeingangswellen 6, 7 geschoben, anschließend werden die Druckanschlüsse mit den Druckleitungen der Druckgeber verbunden. Bei der Verbindung von Antriebseinheit und Getriebe 5 wird die Steckverbindung gebildet.

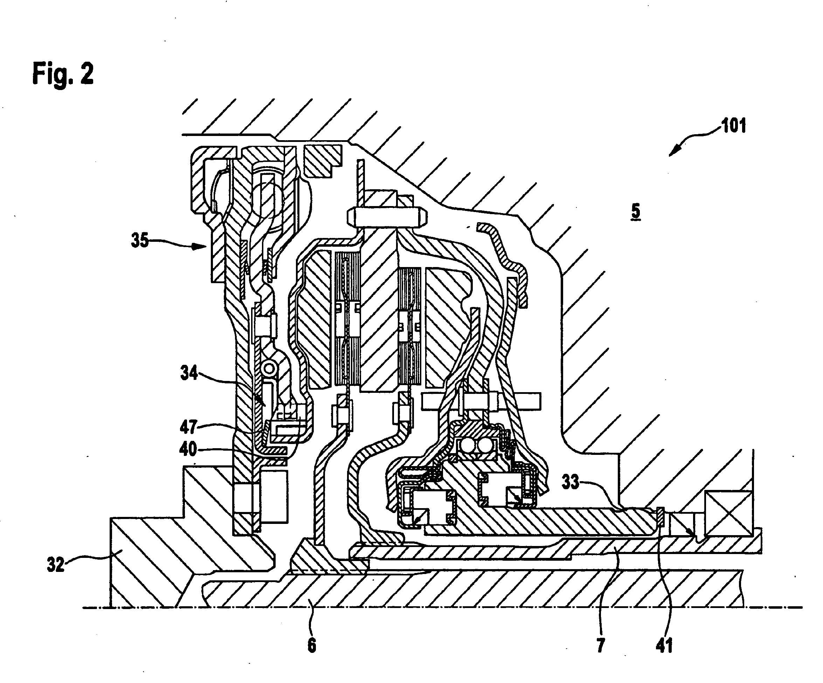

Figur 2 zeigt eine gegenüber der Doppelkupplung 1 der Figur 1 veränderte Lagerung der Doppelkupplung 101. Hierbei ist die Außenverzahnung 40 der Steckverbindung 34 mittels eines axial wirksamen Energiespeichers 47, beispielsweise einer Teller- oder Membranfeder, gegenüber dem Anschlag 41 verspannt, so dass die Doppelkupplung axial am Anschlag 41 festgelegt ist. Um vergleichsweise große Verschiebewege der Doppelkupplung 101 als Federweg vorhalten zu können, kann der Energiespeicher 47 während der Montage plastisch verformt werden. Ein axialer Ausgleich von Fertigungstoleranzen beispielsweise der antriebsseitigen Teile wie des Drehschwingungsdämpfers 35, der Antriebswelle und dergleichen sowie der getriebeseitigen Teile und der Doppelkupplung 101 kann über die Steckverzahnung 34 entgegen der Wirkung des Energiespeichers 47 erfolgen. Hierbei ist die Wirkung des Energiespeichers 47 und der Steckverzahnung 34 auf die größte Toleranz ausgelegt.

Ein Winkelausgleich der Rotationsachsen der Getriebeeingangswellen 6, 7 des Getriebes 5 und der Antriebswelle 32 erfolgt über eine Schrägstellung der Doppelkupplung 101. Hierbei wirken die Steckverzahnung 34 und der Ballus 33 als Gelenk.

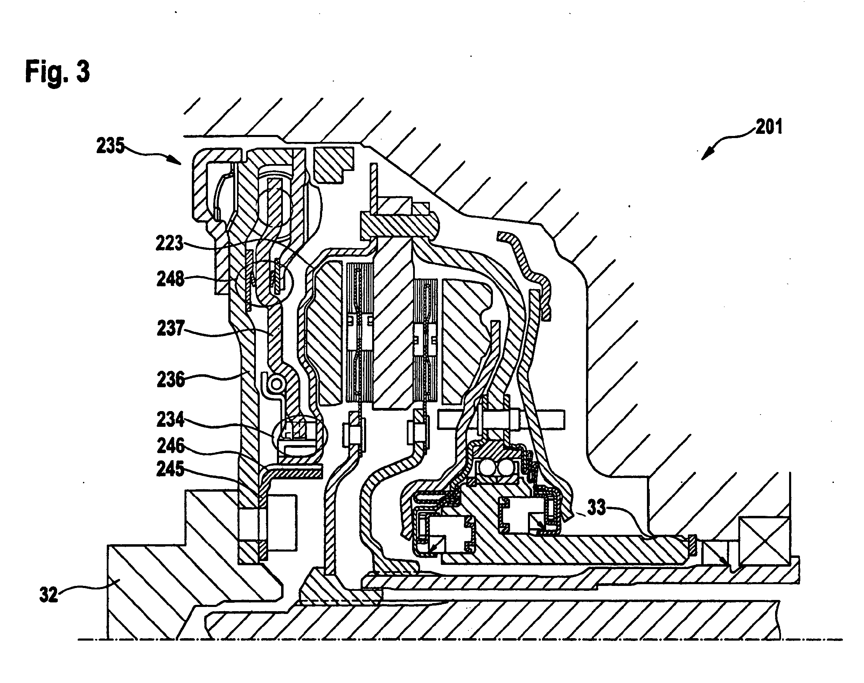

Figur 3 zeigt eine alternative Ausgestaltung einer Doppelkupplung 201, die auf dem Eingangsteil 236 des Drehschwingungsdämpfers 235 beziehungsweise auf der Antriebswelle gelagert ist. Hierzu bildet das Gehäuseteil 223 der Doppelkupplung 201 mit dem auf der Antriebswelle 32 fest aufgenommenen Lagerblech 245 eine Lagerung 246, beispielsweise eine Gleitlagerung oder eine Lagerung mittels eines Wälzlagers wie Rillenkugellagers. Die Steckverzahnung 234 ist dabei zwischen dem Ausgangsteil 237 und dem Gehäuseteil 223 wirksam, so dass die Lagerung 246 die Relativverdrehung von Eingangs- und Ausgangsteil des Drehschwingungsdämpfers 235 auszugleichen hat. Das Ausgangsteil 237, beispielsweise die Sekundärseite eines Zweimassenschwungrads wird dabei über die Ausgestaltung der Federkonstanten der Reibeinrichtung 248 des Drehschwingungsdämpfers 235 und die Steckverzahnung 234 positioniert. Um die Winkelfehler zwischen der Zentrierung über den Ballus 33 und der Lagerung 246 auszugleichen, kann das Gehäuseteil 223 biegeweich ausgestaltet werden. Alternativ oder zusätzlich kann die Lagerung 246 auf den erforderlichen Schwenkwinkel angepasst werden.

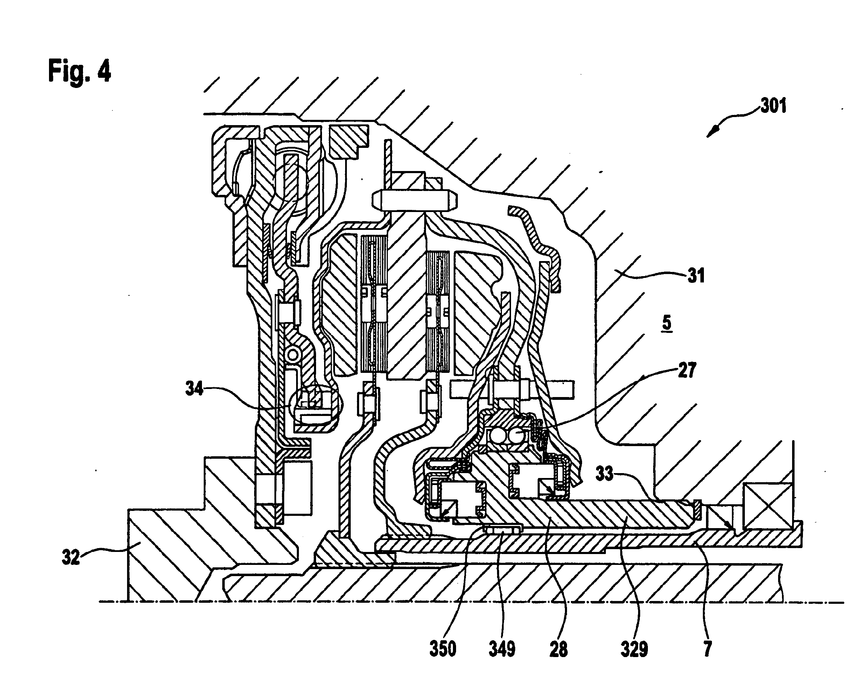

Figur 4 zeigt eine gegenüber den Doppelkupplungen der Figuren 1 bis 3 veränderte Doppelkupplung 301 mit einer zusätzlichen Lagerung 349, die als Gleitlagerung oder Wälzlagerung mit einem fettgeschmierten Nadellager ausgeführt sein kann. Die Lagerung 349 auf der als Hohlwelle ausgebildeten Getriebeeingangswelle 7 stabilisiert die Abstützung des axialen Ansatzes 329 am Getriebegehäuse 31. Hierzu ist die Lagerung 349 axial in Linie radial unterhalb des Stützlagers 27 angeordnet. Die Lagerung ist als Loslagerung angelegt und stabilisiert das Aktorgehäuse 28 insbesondere nach der Montage der Doppelkupplung 301 auf dem Getriebe 5 und vor dem Zusammenbau mit der Antriebseinheit. Dabei wird die Doppelkupplung 301 zur Bildung der Steckverbindung 34 an der Getriebeeingangswelle 7 abgestützt und vorzentriert. Bei der Ausbildung der Steckverbindung bei der Verbindung von Getriebe 5 und Antriebseinheit kann ein Lüftspiel 350 zwischen Aktorgehäuse 28 und Getriebeeingangswelle 7 ausgebildet werden, so dass die vollständige Lagerung der Doppelkupplung 301 erfindungsgemäß am Getriebegehäuse 31 erfolgt.

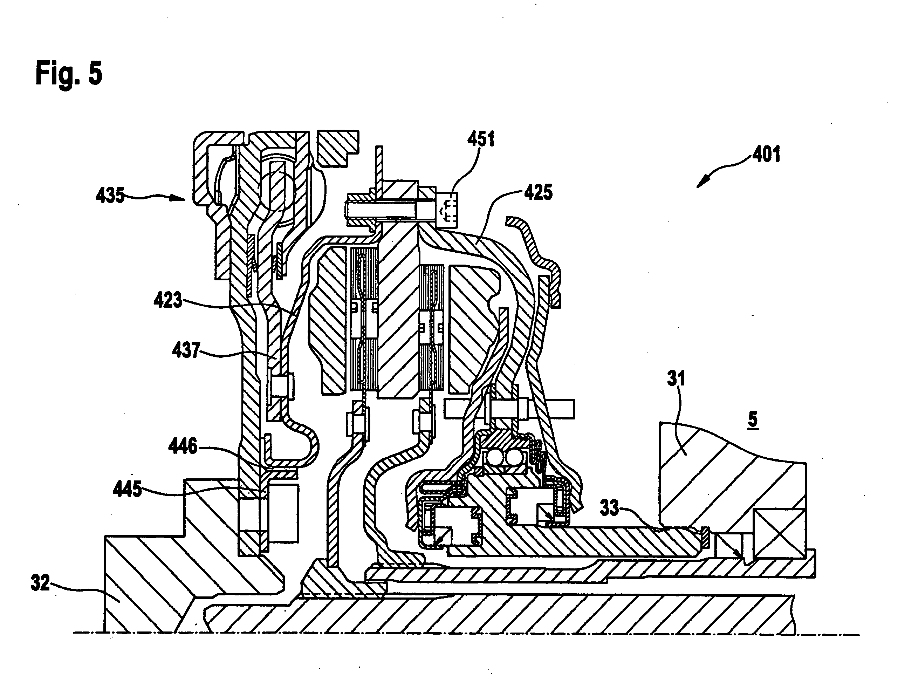

Figur 5 zeigt ein Ausführungsbeispiel einer Doppelkupplung 401, die im Unterschied zu den zuvor beschriebenen Ausführungsbeispielen keine Steckverzahnung aufweist. Die Doppelkupplung 401 ist mittels des Gehäuseteils 423 fest mit dem Ausgangsteil 437 des Drehschwingungsdämpfers 435 verbunden, beispielsweise vernietet. Das Gehäuseteil 423 bildet mit einem an der Antriebswelle 32 fest angeordneten Lagerblech 445 die Lagerung 446, so dass an dieser Lagerung sowohl das Ausgangsteil 437 als auch die Doppelkupplung 401 aufgenommen sind. Die Montage der Doppelkupplung 401 erfolgt beim Zusammenbau des Getriebes 5 mit der Antriebseinheit. Dabei wird das an dem Drehschwingungsdämpfer 435 vormontierte Gehäuseteil 423 mittels der Schrauben 451 mit dem verbleibenden Kupplungsgehäuse 425 verschraubt.

Die Doppelkupplung 401 ist dabei antriebsseitig axial fest mit dem Drehschwingungsdämpfer 435 beziehungsweise der Antriebswelle 32 verbunden, der Ballus 33 ist daher zum Ausgleich von Bauteiltoleranzen im Getriebegehäuse 31 axial verlagerbar und ohne Anschlag ausgestattet. Zum Ausgleich von Winkelversätzen zwischen den Rotationsachsen von Getriebe 5 und Antriebseinheit sowie zur Dämpfung von Axial- und/oder Taumelschwingungen der Antriebswelle 32 kann das Gehäuseteil 423 biegeweich ausgestaltet sein.

### Bezugszeichenliste

- 1: Doppelkupplung
- 2: Reibungskupplung
- 3: Reibungskupplung
- 4: Rotationsachse
- 5: Getriebe
- 6: Getriebeeingangswelle
- 7: Getriebeeingangswelle
- 8: Anpressplatte
- 9: Reibfläche
- 10: Reibfläche
- 11: Druckplatte
- 12: Druckplatte
- 13: Reibbelag
- 14: Reibbelag
- 15: Kupplungsscheibe
- 16: Kupplungsscheibe
- 17: Übertragungselement
- 18: Übertragungselement
- 19: Betätigungseinrichtung
- 20: Betätigungseinrichtung
- 21: Betätigungssystem
- 22: Zuganker
- 23: Gehäuseteil
- 24: Gehäuseteil
- 25: Kupplungsgehäuse
- 26: Niet
- 27: Stützlager
- 28: Aktorgehäuse
- 29: axialer Ansatz
- 30: Öffnung
- 30a: Aufnahmefläche
- 31: Getriebegehäuse
- 32: Antriebswelle
- 33: Ballus
- 34: Steckverbindung
- 35: Drehschwingungsdämpfer
- 36: Eingangsteil
- 37: Ausgangsteil
- 38: Flanschteil
- 39: Innenverzahnung
- 40: Außenverzahnung
- 41: Anschlag
- 42: Energiespeicher
- 43: Spannblech
- 44: Lagerblech
- 45: Lagerblech
- 46: Lagerung
- 47: Energiespeicher
- 101: Doppelkupplung
- 201: Doppelkupplung
- 223: Gehäuseteil
- 234: Steckverzahnung
- 235: Drehschwingungsdämpfer
- 236: Eingangsteil
- 237: Ausgangsteil
- 245: Lagerblech
- 246: Lagerung
- 248: Reibeinrichtung
- 301: Doppelkupplung
- 329: axialer Ansatz
- 349: Lagerung
- 350: Lüftspiel
- 401: Doppelkupplung
- 423: Gehäuseteil
- 425: Kupplungsgehäuse
- 435: Drehschwingungsdämpfer
- 437: Ausgangsteil
- 445: Lagerblech
- 446: Lagerung
- 451: Schrauben

## Patentansprüche

1. Doppelkupplung (1, 101, 201, 301, 401) mit zwei von einer Antriebseinheit angetriebenen Reibungskupplungen (2, 3) mit einem gemeinsamen Kupplungsgehäuse (25, 425) und einer mit diesem fest verbundenen Anpressplatte (8) mit zwei Reibflächen (9, 10) sowie zwei jeweils einer Reibfläche (9, 10) zugewandten, axial verlagerbaren Druckplatten (11, 12), wobei zwischen jeweils einer Druckplatte (11, 12) und der Anpressplatte (8) Reibbeläge (13, 14) mit jeweils einer Getriebeeingangswelle (6, 7) eines Getriebes (5) drehfest verbundenen Kupplungsscheibe (15, 16) zur Bildung eines Reibeingriffs durch axiale Beaufschlagung der Druckplatten (11, 12) mittels eines Betätigungssystems (21) mit jeweils einer Betätigungseinrichtung (19, 20) verspannbar sind, wobei das Betätigungssystem (21) gegenüber dem Kupplungsgehäuse (25, 425) verdrehbar und an diesem axial fest aufgenommen ist und die Doppelkupplung (1, 101, 201, 301, 401) mittels des Betätigungssystems (21) an einem Getriebegehäuse (31) des Getriebes (5) radial abgestützt ist, **dadurch gekennzeichnet, dass** die Doppelkupplung (101) axial entgegen der Wirkung eines Energiespeichers (47) begrenzt verlagerbar ist und dass eine axiale Verlagerung der Doppelkupplung (101, 201) getriebeseitig axial mittels eines Anschlags (41) begrenzt ist und der Energiespeicher (47) antriebsseitig angeordnet ist, wobei die Doppelkupplung (101) mittels des Energiespeichers (47) gegen den Anschlag (41) verspannt wird.

2. Doppelkupplung (101) nach Anspruch 1, **dadurch gekennzeichnet, dass** der Energiespeicher während der Montage der Doppelkupplung (101) plastisch verformt wird.

3. Doppelkupplung (1, 101, 201, 301, 401) nach Anspruch 1 oder 2, **dadurch gekennzeichnet, dass** das Betätigungssystem (21) ein für beide Betätigungseinrichtungen (19, 20) gemeinsames Aktorgehäuse (28) aufweist, das mit dem Getriebegehäuse (31) eine Spielpassung bildet.

4. Doppelkupplung (1, 101, 201, 301) nach einem der Ansprüche 1 bis 3, **dadurch gekennzeichnet, dass** die Doppelkupplung (1, 101, 201, 301) antriebsseitig mittels einer Steckverzahnung (34, 234) drehfest und axial begrenzt verlagerbar aufgenommen ist.

5. Doppelkupplung (1, 109, 201) nach Anspruch 3 oder 4, **dadurch gekennzeichnet, dass** die Spielpassung innerhalb eines vorgegebenen Winkels gelenkig verschwenkbar ist.

6. Doppelkupplung (1, 101, 301) nach Anspruch 4 oder 5, **dadurch gekennzeichnet, dass** die Steckverbindung (34) an einem Ausgangsteil (37) eines eingangsseitig mit einer Antriebswelle (32) der Antriebseinheit verbundenen Drehschwingungsdämpfers (35) angeordnet ist.

7. Doppelkupplung (401) nach Anspruch 3, **dadurch gekennzeichnet, dass** die Doppelkupplung (401) antriebsseitig axial fest verbunden ist, wobei die Doppelkupplung (401) mit einem Ausgangsteil (439) eines eingangsseitig mit einer Antriebswelle (32) der Antriebseinheit verbundenen Drehschwingungsdämpfers (435) fest verbunden ist und an der Spielpassung axial unbegrenzt verlagerbar ist.

8. Doppelkupplung (301) nach einem der Ansprüche 3 bis 7, **dadurch gekennzeichnet, dass** das Aktorgehäuse (28) mittels eines Stützlagers (27) am Kupplungsgehäuse (25) aufgenommen ist.

9. Doppelkupplung (301) nach Anspruch 8, **dadurch gekennzeichnet, dass** das Aktorgehäuse (28) zumindest während der Montage zusätzlich auf einer Getriebeeingangswelle (7) verdrehbar abgestützt ist.

10. Doppelkupplung (301) nach Anspruch 9, **dadurch gekennzeichnet, dass** das die Abstützung mittels eines axial verlagerbaren Nadel- oder Gleitlagers erfolgt, wobei Abstützung und das Stützlager (27) radial übereinander und axial in Linie angeordnet sind.

11. Doppelkupplung (301) nach einem der Ansprüche 9 oder 10, **dadurch gekennzeichnet, dass** nach der Montage zwischen Aktorgehäuse (28) und Abstützung ein Lüftspiel (350) gebildet wird.

12. Doppelkupplung (201) nach einem der Ansprüche 4 oder 5, 8 bis 11, **dadurch gekennzeichnet, dass** die Doppelkupplung (201) antriebsseltig auf einer Antriebswelle (32) der Antriebseinheit gelagert ist und mit dem Ausgangsteil (237) eines Drehschwingungsdämpfers (235) mittels der Steckverzahnung (234) drehschlüssig verbunden ist.

13. Doppelkupplung (201) nach Anspruch 12, **dadurch gekennzeichnet, dass** die Lagerung (246) mittels eines Gleitlagers erfolgt, wobei der radial innere Lagerring antriebsseitig verbunden und der radial äußere Lagerring von einem Gehäuseteil (223) der Doppelkupplung (201) gebildet wird.

14. Doppelkupplung (1, 101, 201, 301, 401) nach einem der Ansprüche 1 bis 13, **dadurch gekennzeichnet, dass** diese intern kraftausgeglichen ist.

15. Doppelkupplung (401) nach einem der Ansprüche 1 bis 14, **dadurch gekennzeichnet, dass** zwischen der Antriebswelle und der Anpressplatte ein axial flexibles und in Umfangsrichtung steifes Gehäuseteil (423) vorgesehen ist.

16. Doppelkupplung (1, 101, 201, 301) nach einem der Ansprüche 1 bis 14, **dadurch gekennzeichnet, dass** die Doppelkupplung und das Betätigungssystem eine komplette Baueinheit bilden, die als Ganzes getriebeseitig vormontiert wird.

17. Doppelkupplung (1) nach einem der Ansprüche 1 bis 16, **dadurch gekennzeichnet, dass** die Doppelkupplung zwischen einem antriebsseitigen und einem getriebeseitigen Anschlag axial frei schwimmend aufgenommen ist.

## Claims

1. Double clutch (1, 101, 201, 301, 401) having two friction clutches (2, 3) which are driven by a drive unit and have a common clutch housing (25, 425) and a pressing plate (8) which is connected fixedly to it and has two frictional faces (9, 10) and two axially displaceable pressure plates (11, 12) which in each case face a frictional face (9, 10), it being possible for friction linings (13, 14) of a clutch plate (15, 16) which is connected fixedly to in each case one transmission input shaft (6, 7) of a transmission (5) so as to rotate with it to be braced between in each case one pressure plate (11, 12) and the pressing plate (8) in order to form a frictional engagement by way of axial loading of the pressure plates (11, 12) by means of an actuating system (21) with in each case one actuating device (19, 20), the actuating system (21) being rotatable with respect to the clutch housing (25, 425) and being received on the latter such that it is fixed axially, and the double clutch (1, 101, 201, 301, 401) being supported radially on a transmission housing (31) of the transmission (5) by means of the actuating system (21), **characterized in that** the double clutch (101) can be displaced to a restricted extent axially counter to the action of an energy store (47), and **in that** an axial displacement of the double clutch (101, 201) is delimited on the transmission side axially by means of a stop (41) and the energy store (47) is arranged on the drive side, the double clutch (101) being braced against the stop (41) by means of the energy store (47).

2. Double clutch (101) according to Claim 1, **characterized in that** the energy store is deformed plastically during the assembly of the double clutch (101).

3. Double clutch (1, 101, 201, 301, 401) according to Claim 1 or 2, **characterized in that** the actuating system (21) has a common actuator housing (28) for both actuating devices (19, 20), which actuator housing (28) forms a clearance fit with the transmission housing (31).

4. Double clutch (1, 101, 201, 301) according to one of Claims 1 to 3, **characterized in that** the double clutch (1, 101, 201, 301) is received on the drive side by means of a spline-type gearing (34, 234) such that it can be displaced in a rotationally fixed and axially restricted manner.

5. Double clutch (1, 101, 201) according to Claim 3 or 4, **characterized in that** the clearance fit can be pivoted in an articulated manner within a predefined angle.

6. Double clutch (1, 101, 301) according to Claim 4 or 5, **characterized in that** the spline-type connection (34) is arranged on an output part (37) of a torsional vibration damper (35) which is connected on the input side to a drive shaft (32) of the drive unit.

7. Double clutch (401) according to Claim 3, **characterized in that** the double clutch (401) is connected in an axially fixed manner on the drive side, the double clutch (401) being connected fixedly to an output part (439) of a torsional vibration damper (435) which is connected on the input side to a drive shaft (32) of the drive unit, and it being possible for the double clutch (401) to be displaced at the clearance fit in an axially unrestricted manner.

8. Double clutch (301) according to one of Claims 3 to 7, **characterized in that** the actuator housing (28) is received on the clutch housing (25) by means of a supporting bearing (27).

9. Double clutch (301) according to Claim 8, **characterized in that** the actuator housing (28) is additionally supported rotatably on a transmission input shaft (7) at least during the assembly.

10. Double clutch (301) according to Claim 9, **characterized in that** the support is effected by means of an axially displaceable needle or plain bearing, the support and the supporting bearing (27) being arranged radially above one another and axially in line.

11. Double clutch (301) according to either of Claims 9 and 10, **characterized in that** an air play (350) is formed between the actuator housing (28) and the support after the assembly.

12. Double clutch (201) according to one of Claims 4, 5 and 8 to 11, **characterized in that** the double clutch (201) is mounted on the drive side on a drive shaft (32) of the drive unit and is connected to the output part (237) of a torsional vibration damper (235) in a rotationally locking manner by means of the spline-type gearing (234).

13. Double clutch (201) according to Claim 12, **characterized in that** the mounting (246) is effected by means of a plain bearing, the radially inner bearing ring being connected on the drive side and the radially outer bearing ring being formed by a housing part (223) of the double clutch (201).

14. Double clutch (1, 101, 201, 301, 401) according to one of Claims 1 to 13, **characterized in that** it is internally force-balanced.

15. Double clutch (401) according to one of Claims 1 to 14, **characterized in that** a housing part (423) which is flexible axially and is rigid in the circumferential direction is provided between the drive shaft and the pressing plate.

16. Double clutch (1, 101, 201, 301) according to one of Claims 1 to 14, **characterized in that** the double clutch and the actuating system form a complete structural unit which is pre-assembled in its entirety on the transmission side.

17. Double clutch (1) according to one of Claims 1 to 16, **characterized in that** the double clutch is received between a drive-side and a transmission-side stop so as to float in an axially free manner.

## Revendications

1. Embrayage double (1, 101, 201, 301, 401) comprenant deux embrayages à friction (2, 3) entraînés par une unité d'entraînement avec un boîtier d'embrayage commun (25, 425) et un plateau de pressage (8) connecté fixement à celui-ci avec deux surfaces de friction (9, 10) ainsi que deux plateaux de pression (11, 12) déplaçables axialement, tournés respectivement vers une surface de friction (9, 10), des garnitures de friction (13, 14) d'un disque d'embrayage (15, 16) connecté de manière solidaire en rotation à chaque fois avec un arbre d'entrée de boîte de vitesses (6, 7) d'une boîte de vitesses (5) pouvant être serrées entre à chaque fois un plateau de pression (11, 12) et le plateau de pressage (8) pour former un engagement par friction par sollicitation axiale des plateaux de pression (11, 12) au moyen d'un système d'actionnement (21) avec à chaque fois un dispositif d'actionnement (19, 20), le système d'actionnement (21) pouvant tourner par rapport au boîtier d'embrayage (25, 425) et étant reçu de manière fixe axialement sur celui-ci et l'embrayage double (1, 101, 201, 301, 401) étant supporté radialement au moyen du système d'actionnement (21) sur un boîtier de transmission (31) de la boîte de vitesses (5), **caractérisé en ce que** l'embrayage double (101) peut être déplacé de manière limitée axialement à l'encontre de l'effet d'un accumulateur d'énergie (47) et **en ce qu'**un déplacement axial de l'embrayage double (101, 201) est limité du côté de la boîte de vitesses axialement au moyen d'une butée (41) et l'accumulateur d'énergie (47) est disposé du côté de l'entraînement, l'embrayage double (101) étant serré au moyen de l'accumulateur d'énergie (47) contre la butée (41).

2. Embrayage double (101) selon la revendication 1, **caractérisé en ce que** l'accumulateur d'énergie est déformé plastiquement pendant le montage de l'embrayage double (101).

3. Embrayage double (1, 101, 201, 301, 401) selon la revendication 1 ou 2, **caractérisé en ce que** le système d'actionnement (21) présente un boîtier d'actionneur (28) commun aux deux dispositifs d'actionnement (19, 20), qui forme avec le boîtier de transmission (31) un ajustement avec jeu.

4. Embrayage double (1, 101, 201, 301) selon l'une quelconque des revendications 1 à 3, **caractérisé en ce que** l'embrayage double (1, 101, 201, 301) est reçu de manière solidaire en rotation et déplaçable axialement de manière limitée du côté de l'entraînement au moyen d'une denture enfichable (34, 234).

5. Embrayage double (1, 101, 201) selon la revendication 3 ou 4, **caractérisé en ce que** l'ajustement avec jeu peut être pivoté de manière articulée à l'intérieur d'un angle prédéfini.

6. Embrayage double (1, 101, 301) selon la revendication 4 ou 5, **caractérisé en ce que** la connexion enfichable (34) est disposée au niveau d'une partie de sortie (37) d'un amortisseur de vibrations de torsion (35) connecté du côté de l'entrée à un arbre d'entraînement (32) de l'unité d'entraînement.

7. Embrayage double (401) selon la revendication 3, **caractérisé en ce que** l'embrayage double (401) est connecté axialement fixement du côté de l'entraînement, l'embrayage double (401) étant connecté fixement à une partie de sortie (439) d'un amortisseur de vibrations de torsion (435) connecté du côté de l'entrée à un arbre d'entraînement (32) de l'unité d'entraînement et pouvant être déplacé de manière illimitée axialement au niveau de l'ajustement avec jeu.

8. Embrayage double (301) selon l'une quelconque des revendications 3 à 7, **caractérisé en ce que** le boîtier d'actionneur (28) est reçu au moyen d'un palier de support (27) sur le boîtier d'embrayage (25).

9. Embrayage double (301) selon la revendication 8, **caractérisé en ce que** le boîtier d'actionneur (28) est en outre supporté de manière rotative au moins pendant le montage sur un arbre d'entrée de boîte de vitesses (7).

10. Embrayage double (301) selon la revendication 9, **caractérisé en ce que** le support a lieu au moyen d'un palier à aiguilles ou d'un palier lisse déplaçable axialement, le support et le palier de support (27) étant disposés radialement l'un au-dessus de l'autre et axialement en ligne.

11. Embrayage double (301) selon l'une quelconque des revendications 9 ou 10, **caractérisé en ce qu'**un jeu (350) est formé après le montage entre le boîtier d'actionneur (28) et le support.

12. Embrayage double (201) selon l'une quelconque des revendications 4 ou 5, 8 à 11, **caractérisé en ce que** l'embrayage double (201) est monté du côté de l'entraînement sur un arbre d'entraînement (32) de l'unité d'entraînement et est connecté de manière fixée en rotation à la partie de sortie (237) d'un amortisseur de vibrations de torsion (235) au moyen de la denture enfichable (234).

13. Embrayage double (201) selon la revendication 12, **caractérisé en ce que** le support sur palier (246) a lieu au moyen d'un palier lisse, la bague de palier radialement interne étant connectée du côté de l'entraînement et la bague de palier radialement extérieure étant formée par une partie de boîtier (223) de l'embrayage double (201).

14. Embrayage double (1, 101, 201, 301, 401) selon l'une quelconque des revendications 1 à 13, **caractérisé en ce que** celui-ci est doté d'une compensation de force interne.

15. Embrayage double (401) selon l'une quelconque des revendications 1 à 14, **caractérisé en ce qu'**entre l'arbre d'entraînement et le plateau de pressage est prévue une partie de boîtier (423) flexible axialement et rigide dans la direction périphérique.

16. Embrayage double (1, 101, 201, 301) selon l'une quelconque des revendications 1 à 14, **caractérisé en ce que** l'embrayage double et le système d'actionnement forment une unité structurelle complète qui est prémontée d'un seul tenant du côté de la boîte de vitesses.

17. Embrayage double (1) selon l'une quelconque des revendications 1 à 16, **caractérisé en ce que** l'embrayage double est reçu de manière flottant librement axialement entre une butée du côté de l'entraînement et une butée du côté de la boîte de vitesses.
